# EUROPEAN PATENT APPLICATION

(11) **EP 1 333 041 A1**
(43) Date of publication of application: **06.08.2003**
(21) Application number: 02075489.1
(22) Date of filing: 05.02.2002
(51) Int. Cl.: C08F 283/01, C09D 167/06, C08L 67/06

(54) **Hardenable unsaturated polyester compositions**

(71) Applicant: Resolution Research Nederland B.V., 1031 CM Amsterdam (NL)
(72) Inventor: Heymans, Denis Marie Charles, 1340 Ottignies (BE); Henry, Nathalie Solange Jeanne Yvette, 5030 Gembloux ( Lonzee) (BE)
(74) Representative: Wittop Koning, Tom Hugo

(57) **Abstract**

The invention relates to hardenable unsaturated polyester (UP) compositions. More in particular, the invention relates to hardenable compositions comprising an unsaturated polyester styrene-free and at least one additional monomer, in which the polyester can sufficiently dissolve, and which can be hardened at either room temperature or at higher temperature with the appropriate initiator. Said composition comprise:
a) an ethylenically unsaturated polyester, obtainable by condensation of
(a,i) an aliphatic mono alcohol, diol or polyol or mixtures thereof;
(a,ii) an unsaturated aliphatic mono acid, dibasic acid, optionally mixed with a cycloaliphatic or aromatic dibasic acid; and optionally
(a,iii) a glycidyl ester of α,α-branched alkane carboxylic acids (a,iv) 5 to 60 wt percent of dicycloalkanediene.
(b) a monomer selected from a
(b,i,) a vinyl ester of an α,α-branched alkane carboxylic acid (b,ii,) a vinyl ester of an aromatic acid (b) being optionally mixed with a monoalkyl(meth)acrylate or poly alkyl(meth)acrylate comonomer
(c) a curing catalyst.

## Description

The invention relates to hardenable unsaturated polyester (UP) compositions.

More in particular, the invention relates to hardenable compositions comprising an unsaturated polyester and at least one monomer, in which the polyester can sufficiently dissolve, and which harden at either room temperature or at higher temperature with the appropriate initiator.

It is generally known that until now most of the presently used unsaturated polyester resins are dissolved in styrene or other vinyl aromatic monomers such as vinyl toluene and divinylbenzene.

Disadvantages involved in said industrial scale processing of unsaturated polyesters are the emission of styrene monomer from the relatively volatile system during processing, and the strong smoke development upon combustion of the hardened polyesters. Due to the pressure of health and/or environmental organisations, there has developed a strong aim to replace styrene and structurally related monomers having a lower vapour pressure and offering a good solubility of the starting unsaturated polyester resins.

Although hardenable compositions, based on an unsaturated polyester and one or more vinyl esters of α,α-branched carboxylic acids, optionally mixed with other vinyl esters, and applied together with a hardening system consisting of a ketone peroxide, a vanadium compound, and an enolizable β-diketo compound as co-accelerator were known since 1981 from e.g. EP 0030050 B1, until now the application of styrene containing UP compositions still continued, as it had appeared that composition containing a vinyl ester were difficult to harden cold by means of the usual hardening systems, comprising in general an organic peroxide and a metal compound soluble in the composition to be hardened ,and optionally a co-accelerator.

Until now the application of styrene containing unsaturated polyester compositions still continued, as it had appeared that compositions containing a vinyl ester were difficult to harden cold by means of the usual hardening systems, comprising in general an organic peroxide and a metal compound soluble in the composition to be hardened, and, optionally, a co-accelerator.

Moreover in said EP 0030050 B1, page 2, lines 49-58, it was also clearly disclosed that the vinyl ester monomers having a boiling point of at least 150°C and copolymerizable with the polyester, and selected from vinyl caproate, vinyl laurate, vinyl pivalate, vinyl benzoate, vinyl chloroacetate and vinyl Versatate could be mixed with other monomers and interalia styrene and divinyl styrene in amounts of up to 50 % by weight relative to the weight of all monomers.

A process for making DCPD (dicyclopentadiene) based unsaturated polyesters was also known from e.g. US 4,4148,765, US 4,348,499, and US 5,777,065 disclosing ways to incorporate DCPD in unsaturated polyesters.

As result of extensive research and experimentation it has now surprisingly found that the more and more objected evaporation of monomers during curing could be significantly reduced by avoiding the occurrence of any vinyl aromatic compound, in the UP composition of the present invention, whereas the cured product thereof simultaneously appears to provide attractive properties. Said vinyl appropriate monomers were found to have a strong inhibiting effect on the reaction rate of vinyl esters of α,α-branched carboxylic acids in the monomer mixture, wherein the unsaturated polyester can be dissolved in an acceptable degree.

Accordingly, the present invention relates to hardenable unsaturated polyester (UP) composition comprising
(a) an ethylenically unsaturated polyester, obtainable by condensation of
   (a,i) an aliphatic mono alcohol, diol or polyol or mixtures thereof;
   (a,ii) an unsaturated aliphatic mono acid, dibasic acid, optionally mixed with a cycloaliphatic or aromatic dibasic acid; and optionally
   (a,iii) a glycidyl ester of α,α-branched alkane carboxylic acids containing from 5 to 14 carbon atoms in the acid moiety;
   (a,iv) 5 to 60 wt percent of dicycloalkanediene having from 10 to 16 carbon atoms.
(b) a monomer selected from a
   (b,i,) a vinyl ester of an α,α-branched alkane carboxylic acid, containing from 8 to 14 carbon atoms in the acid moiety, and
   (b,ii,) a vinyl ester of an aromatic acid containing 7 to 12 carbon atoms in the acid moiety, the component (b) being optionally mixed with a monoalkyl(meth)acrylate or poly alkyl(meth)acrylate comonomer, wherein the alkyl residue contains 1-10 carbon atoms,
   wherein the components (a) and (b) occur in a mutual weight ratio of (a) and (b) in the range of from 40/60 to 70/30, relative to the weight of components (a) and (b), and
(c) a curing catalyst optionally accompanied by (d) an accelerator and (e) a co-accelerator
and wherein the composition being substantially free from any vinyl aromatic compound.

With the term "any vinyl aromatic compound" as used throughout the specification are meant styrene and/or structurally related compounds such as vinyl toluene, α-methyl styrene, chlorostyrene, dichlorostyrene, vinyl naphtalene and the like.

As suitable vinyl esters component (b,i) can be used those which are commercially available under the trademark VEOVA (ex. RESOLUTION Performance Products) and EXXAR (ex. EXXON Chemical Company Inc.). Preferred components (b,ii) are benzoates such as vinyl benzoate or vinyl tert butyl benzoate.

More preferably vinyl esters are used containing 9 to 13 carbon atoms in the acid moiety. According to one preferred embodiment of the applied vinyl ester have been derived from α,α-branched alkane carboxylic acids mixture containing predominantly 11 and 12 carbon atoms.

As suitable glycidyl esters of α,α-branched alkane carboxylic acids can be used those which are commercially available under the trademark CARDURA (ex. RESOLUTION Performance Products) and GLYDEXX (ex. EXXON Chemical Company Inc.) or those which are obtainable by processes known from WO 0156966 A1 and an European co-pending application 01202901.3.

According to a preferred embodiment the constituent a(i), a(i,i), a (i,i,i) are dissolved or dispersed in the constituent a (i,v).

According to a preferred embodiment, the unsaturated polyester has been prepared from :
(a,i) glycol, such as ethylene glycol, diethylene glycol, propylene glycol, butane diol, neopentyl glycol, 4,4'-isopropylene biscyclohexanol, trimethylolpropane of which ethylene glycol and propylene glycol are preferred;
(a,ii) maleic acid anhydride, fumaric acid or itaconic acid and preferably maleic acid anhydride optionally mixed with a minor amount (<20 wt%) of phtalic anhydride, isophtalic acid, terephtalic acid, malonic acid, oxalic acid, adipic acid, sebacic acid, succinic acid, azelaic acid, glutaric acid, hexahydrophtalic acid, hexahydroterephtalic acid, hexahydroisophtalic acid, dihydrophtalic acid, dihydroterephtalic acid, dihydroisophtalic acid, of which phtalic anhydride is preferred, and optionally (a,iii) glycidyl esters of α,α-branched alkane carboxylic acid containing 9-12 carbon atoms in the acid moiety and more preferably those containing 10 carbon atoms in the acid moiety.

According to a preferred embodiment of the compositions of the present invention, the vinyl ester component (b) comprises a vinyl ester of α,α-branched alkane carboxylic acid containing from 9 to 13 carbon atoms in the acid moiety, mixed with multifunctional (meth)acrylate comonomers and more preferably di or trifunctional (meth)acrylate comonomers. More preferably said comonomers are used in a weight ratio (vinyl ester / (meth) acrylate) of from 50/50 to 100/0.

According to another preferred embodiment of the compositions of the present invention as component (a,iv) is used a dicycloalkanediene having from 10 to 14 carbon atoms in an amount of from 10 to 50 weight % relative to the weight of the total UP composition. More in particular norbornadienes are used. Most preferably dicyclopentadiene is used, in an amount from 15 to 50 wt %, relative to the weight of the total UP composition.

Curing catalyst are in general selected from commercially available azo or peroxide compounds.

Preferred curing catalysts (component c) are selected from di-tert-butyl peroxide, di-tert-amyl peroxide, tert-butyl perbenzoate, tert-butyl peroctoate, benzoyl peroxide, dicumyl peroxide or dialkyl ketone peroxides such as methyl ethyl ketone or methyl isobutyl ketone or mixtures of said dialkyl ketones.

They are normally used in amounts of from 0.3 to 3 parts by weight per 100 parts by weight of unsaturated polyester resin and can optionally be combined with an accelerator and a co-accelerator if faster curing rate is required at a given temperature.

More preferably di(alkyl)ketone peroxide derivatives are used.

A preferred mutual weight ratio between the components (a) and (b) is in the range from 45/55 to 65/35 and more preferably used.

Another aspect of the present invention is formed by a process for the cold hardening of the composition, comprising
(a) an ethylenically unsaturated polyester, obtainable by condensation of
   (a,i) an aliphatic mono alcohol, diol or polyol or mixtures thereof;
   (a,ii) an unsaturated aliphatic mono acid, dibasic acid, optionally mixed with a cycloaliphatic or aromatic dibasic acid; and optionally
   (a,iii) a glycidyl ester of α,α-branched alkane carboxylic acids containing from 5 to 14 carbon atoms in the acid moiety;
   (a,iiii) 5 to 50 wt% dicycloalkanediene relative to the complete UP weight composition dissolved in
(b) a monomer selected from (b,i) a vinyl ester of an α,α-branched alkane carboxylic acid, containing from 8 to 14 carbon atoms in the acid moiety,
   (b,ii) a vinyl ester of an aromatic acid containing 7 to 12 carbon atoms in the acid moiety, the component (b) optionally mixed with a monoacrylate or polyacrylate comonomer, wherein the components (a) and (b) occur in a mutual weight ratio of (a) and (b) in the range of from 40/60 to 70/30, relative to the weight of components (a) and (b), and the composition being substantially free from any vinyl aromatic compound and
(c) a curing catalyst selected from azo compounds or organic peroxides and optionally (d) accelerator and (e) co-accelerator.

Still another aspect of the present invention is formed by hardened, shaped, articles obtainable by hardening a hereinbefore specified composition, optionally mixed with one or more auxiliaries, such as low shrink agents and fillers.

Still another aspect of the present invention is formed by gelcoats made by hardening the herein before specified compositions, optionally mixed with one or more auxiliaries, such as low shrink agents and fillers.

More in particular said hardened shaped articles have been derived from a starting composition comprises glass powder, aluminium hydroxide, calcium carbonate or barium sulfate.

Also, more in particular, said hardened shaped articles have been derived from a starting composition comprising, a low shrink agents selected from lower alkyl esters of acrylic acid or methacrylic acids, cellulose acetate butylate, cellulose acetate propionate, polyethylene, polypropylene, saturated polyester.

It will be appreciated that the hardenable compositions according to the present invention show after hardening attractive mechanical properties such as modulus, impact strength, without having the disadvantage of the significantly larger monomer emissions.

The invention is illustrated by the following examples, however without restricting its scope to these specific embodiments.

For the evaluation of the properties of the (UP) compositions of the present invention, the following test methods were used. Evaluation of the monomer evaporation during curing.

Approximately 2 g measured to the nearest lmg of the polyester mixture was placed in an cylindrical aluminium cup in a ventilated oven at 145 °C for 30 minutes. The amount of lost monomer was then evaluated by weighing. The aluminium cup were open at the top. They had a diameter and a height of 5 and 4 cm approximately. The weight loss is reported in percent of the total polyester mixture intake (= volatile organic emissions).

Sample preparation for impact test and flexural properties:

The polyester mixture were poured in a 4mm thick casting and cured in a ventilated oven for 60 minutes at 130°C. The samples were then cooled and cut in pieces according to the ISO methods used for the impact strength and flexural properties measurement. They were then put in a ventilated oven for 60 minutes at 100°C. Finally they were conditioned for one night at 23°C and relative humidity of 50%.

### Evaluation of the Charpy direct impact strength

Impact strength was evaluated according to the standard method ISO 179:1993(E) options 1eU with the following characteristics:

| | |
|---|---|
| Nominal energy of the pendulum: | 2 J |
| Velocity of impact | 2.9 m/s |
| Temperature | 23 °C |
| Humidity | 50 % |

### Determination of flexural properties

Flexural properties were determined according to the standard method ISO 178:1993(E) with the following characteristics:

| | |
|---|---|
| Span length | 64 mm |
| Test speed | 2 mm/min |
| Temperature | 23 °C |
| Humidity | 50 % |

### Examples

### Intermediate 1

A glass reaction flask was equipped with a stirrer, a heating system, a reflux condenser and a Dean Stark. A 10 cm long glass tube was placed between the reactor and the Dean Stark to minimise glycol losses. This reactor was charged with 5 mol of maleic anhydride, 3 mol of dicyclopentadiene (purity 90%) and 3 mol of deionized water, and the resultant mixture was heated at 130°C for 3 hours under nitrogen flow to form an adduct of dicyclopentadiene and maleic acid is formed. To this adduct, 9.45 mol of neopentylglycol was added and the mixture underwent dehydration condensation reaction at 200°C under nitrogen flow for 4 hours. Then 5 mol of maleic anhydride was admixed at 120°C and the reaction was heated again at 200°C till an acid value of 25 mg KOH/g.

This polyester was blended in a ratio 60/40 wt/wt with VeoVa 9, EXXAR 12 and a mixture of VeoVa 9 and trimethylol propane triacrylate (TMPTA).

### Example A-E

The polyester Intermediate 1 was mixed with various vinyl ester monomers in a polyester/monomer weight ratio of 2/1, and 1% by weight, relative to the weight of the polyester and monomer, tert-butyl peroxy benzoate (Trigonox C, ex. AKZO NOBEL) was added at room temperature.

### Example F (Comparative)

The polyester Intermediate 1 was mixed with styrene in a polyester/styrene weight ratio of 2/1, and 1% by weight, relative to the weight of the polyester and monomer, tert-butyl peroxy benzoate (Trigonox C, ex. AKZO NOBEL) was added.

The properties of monomer are presented in Table 1.

| Monomer | Molecular weight (Mw) | Boiling range (°C) |
|---|---|---|
| VEOVA 9 | 184 | 185-200 |
| VEOVA 10 | 198 | >195 |
| VEOVA 11 | 212 | >235 |
| EXXAR 12 | 212-226 | >235 |
| Vinyl laurate | 226 | 254 |
| Vinyl-tert-butyl | 204 | - |
| benzoate | | |
| Styrene | 104 | 145 |

### Effect of styrene on the emissions of vinyl ester based polyesters

Table 2 shows that small amounts of styrene have a very significant effect on the volatile emissions of vinyl ester based polyesters. This surprising effect, observed for all vinyl esters investigated, demonstrate that styrene has a strong inhibiting effect on the polymerisation rate of vinyl esters. It is therefore preferable to have styrene-free unsaturated polyesters.

**Table 2:**

| Emission of volatile products | | | |
|---|---|---|---|
| Example | Percentage*of styrene | Other monomer | Volatile emissions** |
| A | 0 | VEOVA 10 | 11.6 |
| | 4.9 | VEOVA 10 | 13.6 |
| | 19.2 | VEOVA 10 | 15.4 |
| | 60.3 | VEOVA 10 | 13.3 |
| F Comparative | 100 | - | 11.5 |
| B | 0 | EXXAR 12 | 8.5 |
| | 10 | EXXAR 12 | 10.4 |
| C | 0 | VEOVA 11 | 7.6 |
| | 10 | VEOVA 11 | 8.8 |
| D | 0 | vinyl laurate | 2.9 |
| | 10 | vinyl laurate | 4.8 |
| E | 0 | VtBB | 2.4 |
| | 10 | VtBB | 3.6 |

| | | | |
|---|---|---|---|
| * Expressed as percent of the total monomer content of the polyester mixture | | | |
| ** Expressed as weight % on UP/monomer mixture | | | |

The resin prepared according to Intermediate 1 was blended with VEOVA 9, example G or EXXAR 12 example H or VEOVA 9/TMPTA example I respectively.

Castings were prepared according the method described above using 1wt% Trigonox C (ex. AKZO NOBEL) and evaluated for flexural strength and impact resistance.

| EX. | Diluent | Ratio resin diluent | Curing time | Flexural modulus Mpa | Impact strength kJ/m2 |
|---|---|---|---|---|---|
| G | VEOVA 9 | 60/40 | 1h30 | 1589 | 2 |
| H | EXXAR 12* | 60/40 | 1h30 | 1802 | 4.5 |
| I | VEOVA 9/TMPTA | 60/32/8 | 1h30 | 2250 | 3.4 |

| | | | | | |
|---|---|---|---|---|---|
| * The casting with EXXAR 12 was prepared at 80°C to avoid solubility problems. | | | | | |

### Intermediate 2

A glass reaction flask was equipped with a stirrer, a heating system, a reflux condenser and a Dean Stark. A 10 cm long glass tube was placed between the reactor and the Dean Stark to minimise glycol losses. This reactor was charged with 0.98 mol of Maleic anhydride and 0.49 mol of dicyclopentadiene, and the resultant mixture was heated for 1 hr at 130°C then 1 hr at 150°C and finally 1hr at 165°C. To this adduct, 2.45 mol of neopentylglycol was added and the mixture underwent dehydration condensation reaction at 200°C under nitrogen flow for 4 hours. Then at 165°C, 1.47 mol of maleic anhydride was admixed and the reaction was heated again at 200°C. 10 minutes after the addition of the maleic anhydride, 0.26 mol of trimethylhexanol was added. The resultant mixture stayed at 200°C till an acid value of 39 mg KOH/g.

The resin prepared according to Intermediate 2 was blended with VEOVA 9,example J or VEOVA 10 example K respectively.

This polyester was blended in a ratio 60/40 wt/wt with VEOVA 9 and VEOVA 10.

| Ex. | Diluent | Ratio resin diluent | Curing time | Flexural modulus MPa | Impact strength kJ/m2 |
|---|---|---|---|---|---|
| J | VEOVA 9 | 60/40 | 1h30 | 1480 | 4.6 |
| K | VEOVA 10 | 60/40 | 1h30 | 1312 | 5 |

### Comparative intermediate Example

### Polyester without DCP

A 2.0 litre double jacked glass reactor was equipped with a stirrer, heating system, a reflux condenser and a Dean-Stark. A glass tube of approximately 10 cm was placed between the reactor and the Dean-Stark to minimise glycol losses (glycol recovery unit).

5.5 moles of propylene glycol, 2.5 moles phthalic anhydride and 20g xylene were gently heated under a slow nitrogen flow to 170-175°C at which temperature the first droplets of water were obtained. The temperature was then increased to about 193°C in 7 hours. 52g were collected in the Dean-Stark and an acid value of 300 mmol/kg was reached.

The glycol recovery unit was then by-passed and the nitrogen flow was increased in order to eliminate the excess of glycol. After two hours, an additional 21g of a mixture of water and glycol was collected in the Dean-Stark.

The system was then cooled to approximately 100°C and 3.5 mole maleic anhydride were added. The reactor content was then heated to 185°C for two hours. 17 g water were collected in the Dean-Stark and a acid value of 660 mmol/kg was reached.

The system was then cooled and when a temperature of 160°C was reached, 2.37 mol of Cardura E10P was added in approximately 30 minutes to scavenge the acid. Finally, the system was cooled to room temperature.

The resin prepared according to Comparative intermediate was blended with VEOVA 9,example G or VEOVA 10 example H or Styrene example I respectively.

### Properties of the resins of comparative example L, M and N

| Ex. | Diluent | Ratio resin diluent | % Trig C | Curing time | Curing Temperature °C | Flexural modulus M Pa | Impact strength kJ/m2 |
|---|---|---|---|---|---|---|---|
| L | VEOVA 9 | 60/40 | 1 | 1h30 | 130 | 897 | 5.7 |
| M | VEOVA 10 | 60/40 | 1 | 1h30 | 130 | 488 | 6.0 |
| N | Styrene | 60/40 | 1 | 1h30 | 130 | 1349 | --- |

From the examples made according the present invention one can appreciate that the formulations (examples J-K) based on a combination UP and VEOVA 9 or VEOVA 10 lead to products with high mechanical properties. Experimental results as reported in Table 2 indicate clearly that formulation with low organic emissions and no styrene emission can be formulated with still the same excellent mechanical properties. According to the examples G-K of the present invention low cost formulation and styrene-free show even better mechanical properties and has a good miscibility between UPR and the vinyl ester monomer, such as VEOVA.

## Claims

1. A hardenable unsaturated polyester (UP) composition comprising
(a) an ethylenically unsaturated polyester, obtainable by condensation of
(a,i) an aliphatic mono alcohol, diol or polyol or mixtures thereof;
(a,ii) an unsaturated aliphatic mono acid, dibasic acid, optionally mixed with a cycloaliphatic or aromatic dibasic acid; and optionally
(a,iii) a glycidyl ester of α,α-branched alkane carboxylic acids containing from 5 to 14 carbon atoms in the acid moiety;
(a,iv) 5 to 60 wt percent of dicycloalkanediene having from 10 to 16 carbon atoms.
(b) a monomer selected from a
(b,i,) a vinyl ester of an α,α-branched alkane carboxylic acid, containing from 8 to 14 carbon atoms in the acid moiety,
(b,ii,) a vinyl ester of an aromatic acid containing 7 to 12 carbon atoms in the acid moiety, the component (b) being optionally mixed with a monoalkyl(meth)acrylate or poly alkyl(meth)acrylate comonomer, wherein the alkyl residue contains 1-10 carbon atoms,
wherein the components (a) and (b) occur in a mutual weight ratio of (a) and (b) in the range of from 40/60 to 70/30, relative to the weight of components (a) and (b), and
(c) a curing catalyst, optionally accompanied by (d) an accelerator and (e) a co-accelerator
and the composition being substantially free from any vinyl aromatic compound.

2. A hardenable unsaturated polyester according to claim 1, **characterised in that** it as been prepared from:
(a,i) glycol, such as ethylene glycol, diethylene glycol, propylene glycol, butane diol, neopentyl glycol, 4,4'-isopropylene biscyclohexanol, trimethylolpropane of which ethylene glycol and propylene glycol are preferred;
(a,ii) maleic acid anhydride, fumaric acid or itaconic acid and preferably maleic acid anhydride optionally mixed with a minor amount (<20 wt%) of phtalic anhydride, isophtalic acid, terephtalic acid, malonic acid, oxalic acid, adipic acid, sebacic acid, succinic acid, azelaic acid, glutaric acid, hexahydrophtalic acid, hexahydroterephtalic acid, hexahydroisophtalic acid, dihydrophtalic acid, dihydroterephtalic acid, dihydroisophtalic acid, of which phtalic anhydride is preferred, and optionally (a,iii) glycidyl esters of α,α-branched alkane carboxylic acid containing 9-12 carbon atoms in the acid moiety.

3. A composition according to claim 2 wherein (a,iii) is a glycidylester of α,α-branched alkane carboxylic acid containing 10 carbon atoms in the acid moiety.

4. A composition according to claims 1-3 **characterised in that** component (a,iv) used is a dicycloalkanediene having from 10 to 14 carbon atoms in an amount of from 10 to 50 wt%, relative to the weight of the total UP composition.

5. A composition according to claim 4, wherein as the dicycloalkanediene dicyclopentadiene is used, in an amount of from 10 to 40 wt%, relative to the weight of the total UP composition.

6. A composition according to claims 1-5 **characterised in that** component (b) comprises a vinyl ester of α,α-branched alkane carboxylic acid containing from 9 to 13 carbon atoms in the acid moiety, mixed with multifunctional (meth)acrylate comonomers and more preferably di or trifunctional (meth)acrylate comonomers. More preferably said comonomers are used in a weight ratio (vinyl ester/(meth) acrylate) of from 50/50 to 100/0.

7. A composition according to claims 1-6 **characterised in that** component (b) comprises vinyl ester derived from α,α-branched alkane carboxylic acids mixture containing predominantly 11 and 12 carbon atoms.

8. Hardened, shaped, articles obtainable by hardening a composition according to claims 1-7, optionally mixed with one or more auxiliaries, such as low shrink agents and fillers.

9. Gelcoats made by hardening the compositions according to claims 1 to 7, optionally mixed with one or more auxiliaries, such as low shrink agents and fillers.

10. Shaped articles according to claim 8 comprising a low shrink agent selected from lower alkyl esters of acrylic acid or methacrylic acids, cellulose acetate butylate, cellulose acetate propionate, polyethylene, polypropylene, saturated polyester.
